# Europäisches Patentamt
## European Patent Office
## Office européen des brevets

(19)

(11) Veröffentlichungsnummer: **0 145 803**
**B1**

(12) # EUROPÄISCHE PATENTSCHRIFT

(45) Veröffentlichungstag der Patentschrift:
**21.09.88**

(51) Int. Cl.⁴: **B 23 K 20/04**

(21) Anmeldenummer: **83112718.8**

(22) Anmeldetag: **17.12.83**

(54) Verfahren zur Herstellung von warmplattiertem Metallband.

(43) Veröffentlichungstag der Anmeldung:
**26.06.85 Patentblatt 85/26**

(45) Bekanntmachung des Hinweises auf die Patenterteilung:
**21.09.88 Patentblatt 88/38**

(84) Benannte Vertragsstaaten:
**DE**

(56) Entgegenhaltungen:
**DE-A-2 515 797**
**FR-A-2 243 048**
**US-A-3 125 805**
**US-A-3 387 357**

**BLECH ROHRE PROFILE, Band 23, Nr. 4, April 1976, Bamberg, BRD "Krupp/Platzer-Planetenwalzwerk nahm Betrieb auf Erstmals für Nickel- und Kupferlegierungen", Seiten 98, 99**
**Patent Abstracts of Japan Band 6, Nr. 260, 18. Dezember 1982 & JP-A-57-154387**
**Patent Abstracts of Japan Band 5, Nr. 203, 23. Dezember 1981 & JP-A-56-119684**
**Patent Abstracts of Japan Band 5, Nr. 10, 22. Januar 1981 & JP-A-55-141390**

(73) Patentinhaber: **Fried. Krupp Gesellschaft mit beschränkter Haftung, Altendorfer Strasse 103, D-4300 Essen 1 (DE)**

(72) Erfinder: **Fink, Peter Johannes, Dr., Juistweg 40, D-4300 Essen 1 (DE)**

EP 0 145 803 B1

## Beschreibung

Das Warmplattieren von metallischen Werkstoffen zwischen zwei angetriebenen Walzen unter Hochdruck ist bekannt. Hierbei kann ein Auswalzen größerer Materialdicken auf dünnes Metallband wegen der Abkühlung des Materials während des Walzens nicht in einer Hitze erfolgen. Für die Herstellung von dünnem plattiertem Blech oder Band ist also nach dem Walzplattieren der Brammen eine Wiedererwärmung und das anschließende Auswalzen in einem weiteren Walzvorgang erforderlich. Dies ist mit einem erheblichen Aufwand verbunden. Deshalb ist durch die deutsche Offenlegungsschrift 2 515 797 bereits das eingangs beschriebene Walzplattieren in einem Vielrollenwalzgerüst vorgeschlagen worden, bei dem warmplattiertes Metallband in einem Walzprozeß ohne Zwischenerhitzung hergestellt wird. Dabei wird jedoch kein Augenmerk auf eine bestimmte Aufeinanderfolge der Brammen gerichtet, so daß, wie allgemein bekannt, entweder mit durch feste Verbindung der Brammenenden abstandslos oder mit so großem Abstand aufeinanderfolgender Brammen gewalzt wird, daß diese sich gegenseitig nicht beeinflussen. In beiden Fällen entstehen jedoch einige betriebstechnische Schwierigkeiten, die eine breite Anwendung dieses Verfahrens bisher verhindert haben. Es ist Aufgabe der vorliegenden Erfindung, diese Schwierigkeiten zu vermeiden und dem Verfahren einen großen Einsatzbereich zu eröffnen. Diese Aufgabe wird durch das Verfahren nach Anspruch 1 gelöst. Der besondere Vorteil eines solchen Vorgehens besteht darin, daß die Eignung des Vielrollenwalzgerüstes für das Walzplattieren für solche Vielrollenwalzgerüste begünstigt wird, bei denen die Arbeitswalzen als lose, d. h. nicht getrieblich in Eigendrehung versetzte Walzen ausgeführt, durch Stützwalzen abgestützt und im Walzspalt über abgeflachte Laufbahnstücke geführt sind. Das Verfahren arbeitet bei sehr weitem Einsatzbereich äußerst wirtschaftlich bei geringem Platzbedarf der betreffenden Anlage. Als Grundwerkstoffe für das Plattieren kommen besonders weiche, unlegierte Kohlenstoffstähle, Kohlenstoffstähle mit höherem Kohlenstoffgehalt und größerer Festigkeit und Feinkornbaustähle für die Erzielung besonders guter Tiefziehfähigkeit in Betracht. Als Plattierungswerkstoffe eignen sich vor allem rostfreie oder rostbeständige Stähle, hochfeste Kohlenstoffstähle oder legierte Stähle, Nickel oder Nickellegierungen.

Hierbei empfiehlt sich besonders eine Vorbereitung des Walzgutes, bei der das Plattierungsmaterial derart auf das Grundmaterial aufgebracht wird, daß es an den Brammenenden in Walzrichtung auf das Grundmaterial der anschließenden, in diesem Bereich nicht mit Plattierungsmaterial belegten Bramme überlappt. Bei dieser Behandlung ist eine weitere Profilierung der Brammenenden nicht mehr erforderlich.

Um den Schutz der beim Plattieren miteinander zu verbindenden Flächen von Grund- und Plattierungsmaterial gegen Verunreinigungen oder Oxidation über die Befestigung durch punktförmiges Aufheften oder Dichtschweißen an den Rändern hinaus zu verbessern, empfiehlt es sich, das Erwärmen der für das Walzen vorbereiteten Bramme in reduzierend eingestellter Atmosphäre oder unter Schutzgas vorzunehmen. Zu diesem Zweck werden auch vorteilhaft bei der Vorbereitung der Bramme für das Walzen vor dem Aufschweißen des Plattierungsmaterials in den Randbereichen Kammern oder Bohrungen im Grundmaterial vorgesehen, die zum Plattierungsmaterial münden und in die reduzierende Stoffe eingebracht werden. Diese reduzierenden Stoffe binden den in Zwischenräumen etwa noch vorhandenen Sauerstoff, so daß dieser vor allem während der Erwärmung der Bramme nicht wirksam werden kann, und verhindern so eine Oxidation. Damit werden die Flächen während der gesamten Zeit bis zum Abschluß des Plattierens in einwandfreiem Zustand gehalten.

In weiterer Ausgestaltung der Erfindung wird zur Herstellung von einseitig plattiertem Metallband vorgeschlagen, daß jeweils zwei aufeinandergelegte Brammen gleichzeitig gewalzt werden, die mit dem Plattierungsmaterial auf den einander zugewandten Flächen belegt, durch eine Schicht aus Kaolin voneinander getrennt und an den Seiten durch angeschweißte Stegbleche miteinander verbunden sind. Das Walzprodukt bleibt auf diese Weise im Querschnitt symmetrisch und es werden gleichzeitig zwei plattierte Metallbänder erzeugt.

Für die Herstellung von beidseitig plattiertem Metallband wird zur Vorbereitung der Bramme für das Walzen das Grundmaterial mit dieses einstückig umschließendem Plattierungsmaterial belegt, das an den an einer Längsseite der Bramme liegenden Stoßkanten verschweißt wird. Dadurch ergibt sich eine besonders einfache und sichere Befestigung des Plattierungsmaterials auf dem Grundmaterial.

Zur Abschlußbehandlung des fertig plattierten Metallbandes im Anschluß an das Walzen im Vielrollenwalzgerüst werden mittels einer fliegenden Schere und Kantenbesäumscheren Unregelmäßigkeiten am Anfang, am Ende und an den Kanten des Metallbandes abgetrennt.

Darüber hinaus ist noch eine besondere Weiterbehandlung des Metallbandes im Anschluß an das Walzen im Vielrollenwalzgerüst vorteilhaft, die in der Weise stattfindet, daß das Metallband mittels einer fliegenden Schere in Bandstücke aufgeteilt wird, die länger als breit sind und anschließend in einem Blechwalzwerk quer zur bisherigen Walzrichtung zu breiten Blechen warm oder kalt ausgewalzt werden. Damit lassen sich Bleche herstellen, deren Breite erheblich größer ist als die des im Vielrollenwalzgerüst gewalzten Metallbandes.

In der Zeichnung sind Ausführungsbeispiele der Erfindung dargestellt, und zwar in

Fig. 1 ein zur Durchführung des vorgeschlagenen Verfahrens geeignetes Walzwerk schematisch in Seitenansicht, in

Fig. 2 das Vielrollenwalzgerüst mit vorgeschaltetem Vorschubwalzgerüst nach Fig. 1 in vergrößerter Wiedergabe, in

Fig. 3 der Walzspalt des Vielrollenwalzgerüstes im Schnitt nach der Linie III-III in Fig. 2, in

Fig. 4 bis Fig. 11 verschiedene Formgebungen von für das Plattieren vorbereiteten Brammen, und zwar in Fig. 4a, 5a, 6a, 7a und Fig. 8 bis 11 in Draufsicht und in Fig. 4b, 5b, 6b und 7b im Querschnitt, in

Fig. 12 ein weiteres zur Durchführung des vorgeschlagenen Verfahrens geeignetes Walzwerk mit nachgeschaltetem Blechwalzwerk schematisch in Draufsicht.

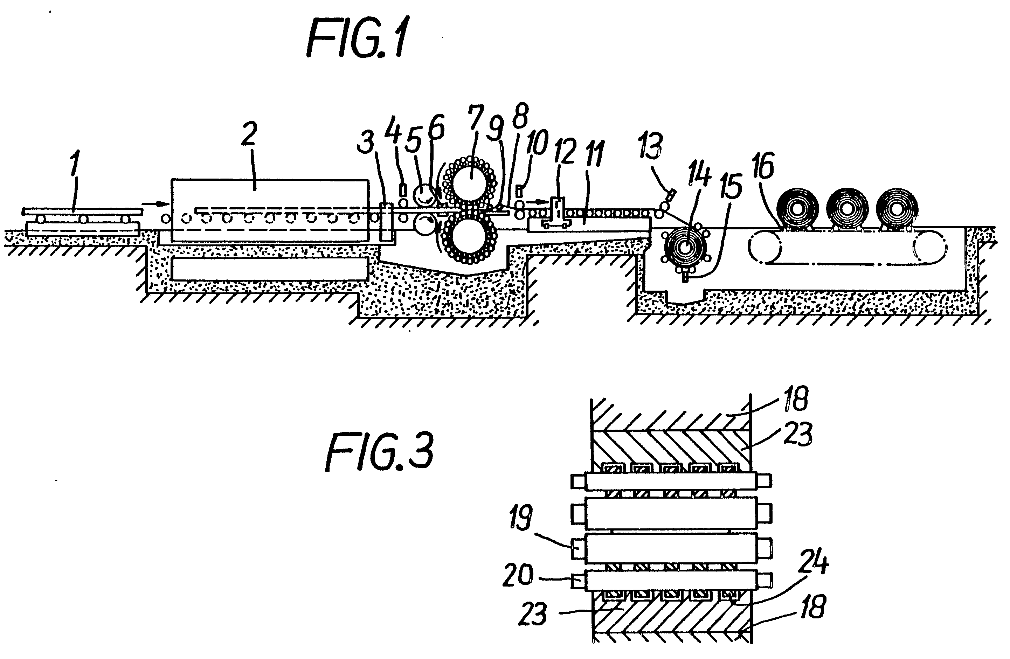

Wie in Fig. 1 wiedergegeben, werden die zu plattierenden Brammen 1 durch eine Chargiervorrichtung einem Hubbalkenwärmofen 2 zugeführt. Die erwärmten Brammen 1 gelangen von dort mit stetiger langsamer Vorschubgeschwindigkeit in ununterbrochener Folge über eine Entzunderungsvorrichtung 3, Einstoßrollen 4, ein Vorschubwalzenpaar 5 und Zentrierrollen 6 in den Walzspalt eines Vielrollenwalzgerüstes 7. Das fertig gewalzte Band 8 läuft über eine Spannrolle 9 und einen Auslauftreiber 10 auf einen Auslaufrollgang 11. Es wird entweder mittels einer fliegenden Schere 12, die auch der Besäumung der Bandenden dient, in einzelne Abschnitte unterteilt, die seitlich gestapelt werden können, oder mittels eines Umlenktreibers 13 einem Bandwickler 14 zugeführt.

Für die Säuberung der Bandkanten ist eine nicht dargestellte Kantenbesäumschere vorgesehen. Ein Manipulator 15 setzt die gewickelten Bandbunde auf ein Kettenförderband 16 ab, das sie nach dem völligen Erkalten zur weiteren Verarbeitung abtransportiert.

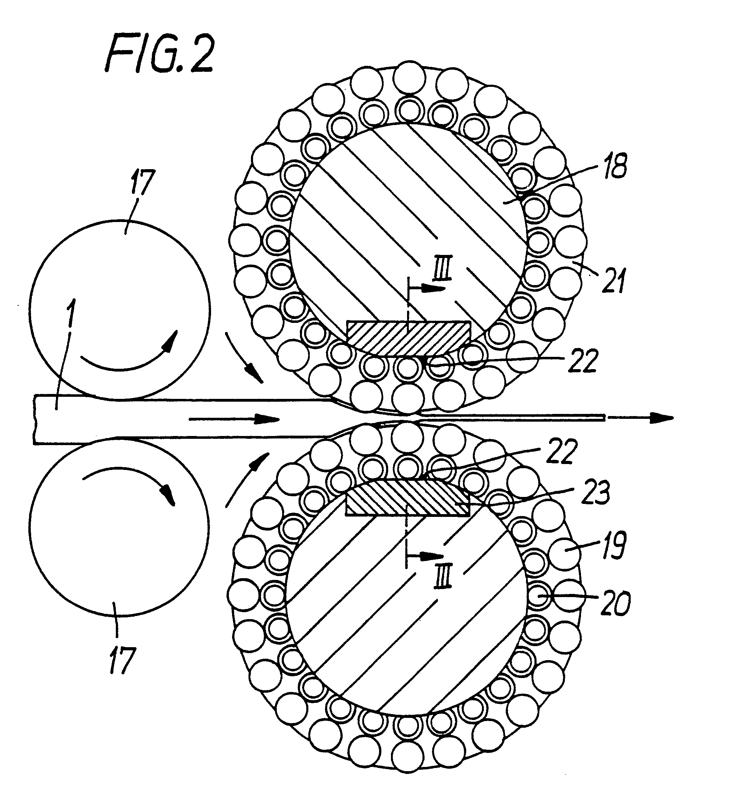

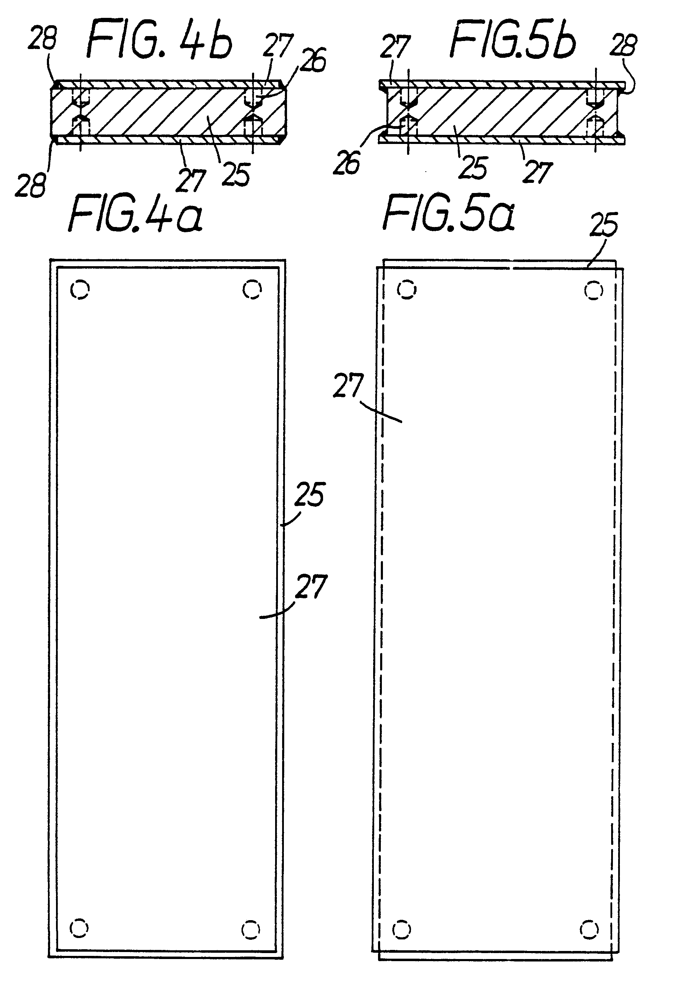

Das Vielrollenwalzgerüst, dem die Bramme 1 im Anschluß an den Durchlauf durch das Vorschubwalzgerüst 17 zugeführt wird, (vgl. Fig. 2 und 3) besteht im wesentlichen aus zwei feststehenden Stützbalken 18, um die Kränze aus Arbeitswalzen 19 und zugeordnete Stützwalzen 20 rotieren. Die Arbeitswalzen 19 und die Zwischenwalzen 20 sind in angetriebenen und miteinander synchron umlaufenden Käfigen 21 radial verschiebbar gelagert und drehen sich planetenartig um den Stützbalken 18. Die Vorschubwalzen 17 führen die vorgewärmte Bramme 1 langsam in den Walzspalt des Vielrollenwalzgerüstes ein. Hier walzt jedes einzelne der rasch umlaufenden Arbeitswalpaare 19 eine dünne Schicht der Bramme keilförmig zu einem Stück fertigen Bandes aus. Dabei wird die im Vorschubwalzgerüst 17 eingeleitete Plattierung abgeschlossen. Das plattierte Band läuft aufgrund der hohen Gesamtreduktion von bis zu 98 % mit entsprechend erhöhter

Geschwindigkeit aus dem Vielrollenwalzgerüst aus. Das Material wird als kleiner Wulst vor den Arbeitswalzen 19 hergeschoben und zu einem vollkommen planparallelen Stück Band ausgewalzt. Zu diesem Zweck sind die sich im Walzspalt gegenüberliegenden Laufbahnstücke 22 für die Zwischenwalzen 20 abgeflacht und auf auswechselbaren Verschleißstücken 23 angeordnet. Da die Zwischenwalzen 20 mit aufgeschobenen frei drehbaren Ringen 24, die die Arbeitswalzen 19 abstützen, versehen sind, lassen sich die Arbeitswalzen 19 ebenfalls frei drehen.

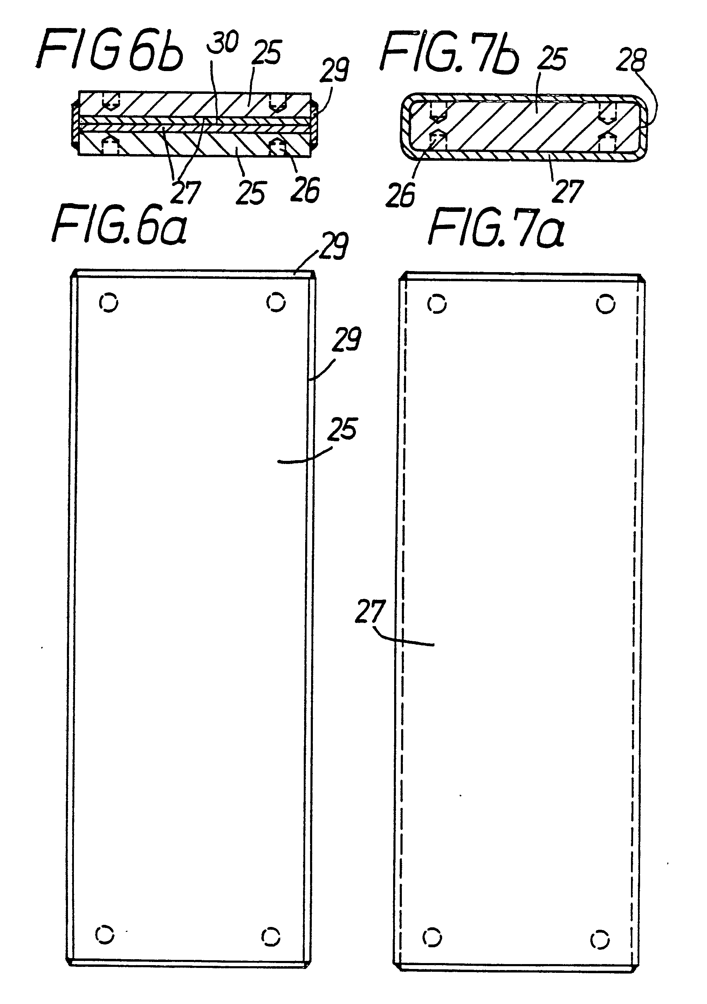

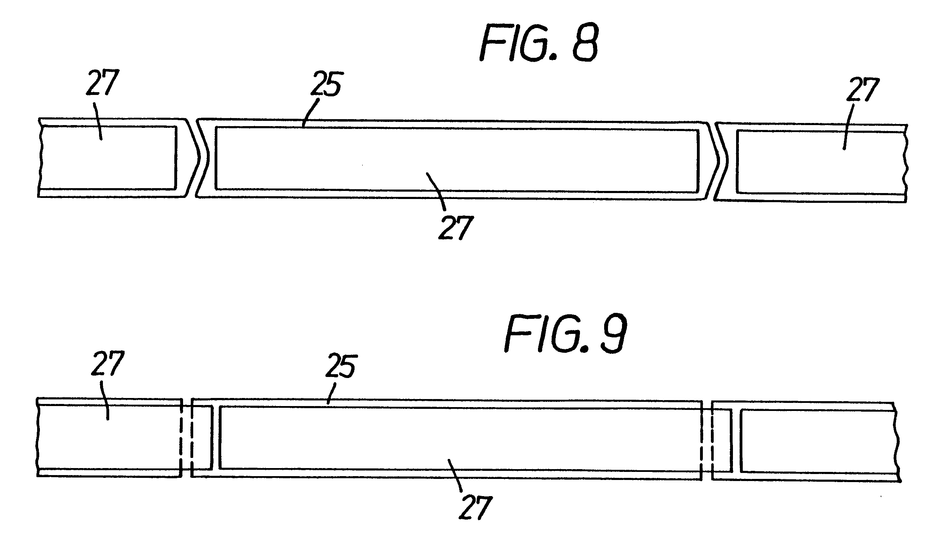

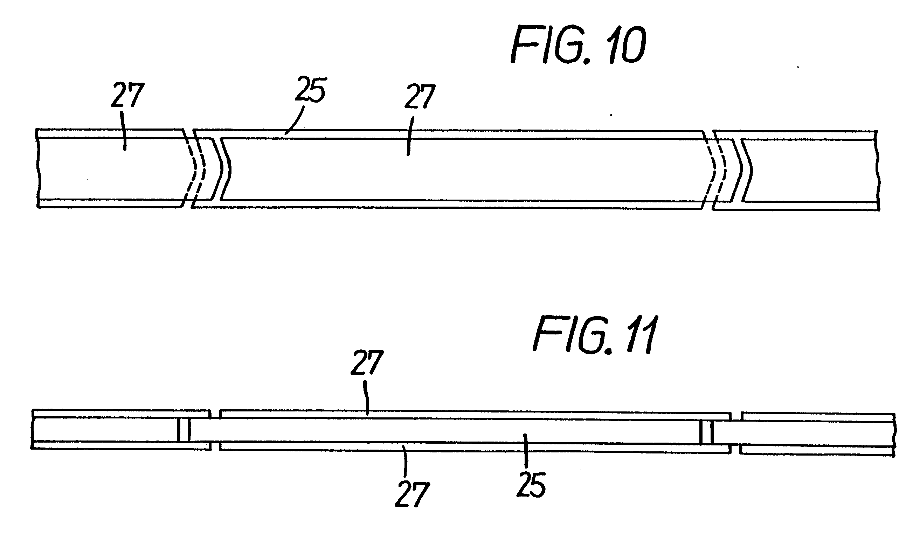

Zur Vorbereitung der Brammen für das Plattieren werden sie und das Plattierungsmaterial vor dem Erwärmen im Hubbalkenofen an den Plattierungsflächen mechanisch, z. B. durch Fräsen, Bohren oder Schleifen, chemisch, z. B. durch Beizen oder elektrochemisch metallisch blank bearbeitet. Um die in Fig. 4a bis 7b gezeigte Formgebung zu erreichen, wird das Grundmaterial 25 an den Rändern mit Bohrungen 26 versehen, in die reduzierende Stoffe eingebracht werden, die bei oder weiterer Bearbeitung Sauerstoffreste binden und eine Oxidation der Plattierungsflächen verhindern. Dann wird das Grundmaterial 25 mit dem Plattierungsmaterial 27 einseitig, beidseitig oder durch Umwickeln belegt. Das Plattierungsmaterial wird durch Schweißpunkte oder Schweißnähte 28 mit dem Grundmaterial 25 verbunden. Bei der Vorbereitung je zweier aufeinandergelegter jeweils einseitig zu plattierender Brammen gemäß Fig. 6a und b werden seitlich Stegbleche 29 an die Brammen angeschweißt. Außerdem wird zwischen die beiden Plattierungsschichten eine Trennschicht 30 aus Kaolin gelegt, die ein Abheben der fertigen Metallbänder voneinander nach dem Plattieren ermöglicht. Die Formung der Brammenenden nach Fig. 8 bis 10 (Draufsicht) und Fig. 11 (Seitenansicht) zur Erzeugung von Überlappungen von Grundmaterial 25 bzw. Plattierungsmaterial 27 zur nächsten Bramme dient dazu, eine ununterbrochene Aufeinanderfolge von Brammen beim Walzen zu ermöglichen. Die Materialüberstände, die dazu erforderlich sind, betragen etwa das 1/2- bis 1 1/2-fache der betreffenden Brammendicke.

Die in dieser Weise vorbereiteten Brammen werden nach anschließender Erwärmung im Hubbalkenofen 2 in reduzierender Atmosphäre oder unter Schutzgas dem Vorschubwalzgerüst 5 zugeführt, in dem sie einer Dickenreduktion von 25 bis 35 % unterworfen werden. Dabei erfolgt ein erstes Festschweißen des Plattierungsmaterials auf dem Grundmaterial. Danach gelangen sie in das Vielrollenwalzgerüst 7, in dem eine Hochumformung von 90 bis 98 % Abnahme durchgeführt wird, wobei die Plattierungsschicht endgültig festgeschweißt wird. Anschließend werden die Anfangs- und Endstücke der fertig plattierten Metallbänder sowie die Bandkanten, in denen sich in den Bohrungen 26 noch Reduktionsmittel befinden, mittels der fliegenden Schere 12 und der als Kreismesserschere ausgeführten Kantenbesäumeinrichtung abgeschnitten.

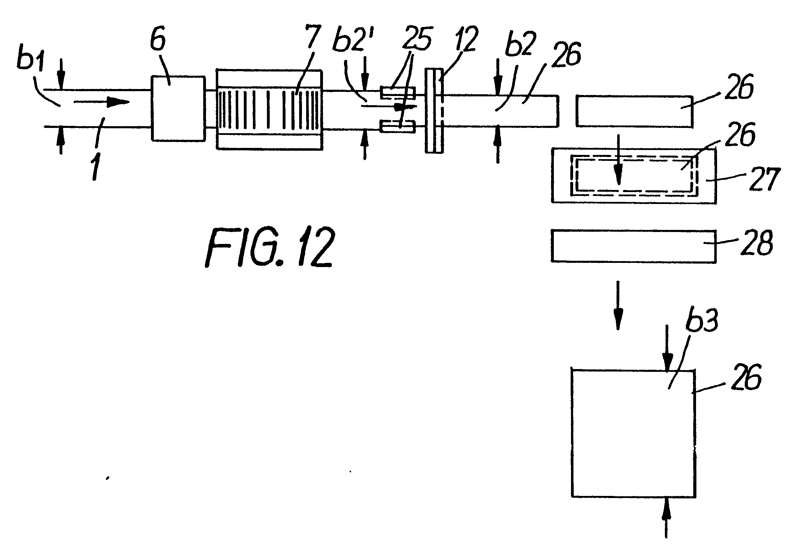

Schließlich kann das Metallband in einer Anordnung nach Fig. 12 noch nach dem Walzen im Vielrollenwalzgerüst 7 und dem Besäumen mittels der Kreismesserschere 25 durch die fliegende Schere 12 in Bandstücke 26 aufgeteilt und danach einer Querwalzung unterworfen worden. Hierzu werden die Bandstücke 26 in Querrichtung einem geeigneten Ofen 27 zur Wiedererwärmung zugeführt und in einem Blechwalzwerk 28 quergewalzt. Während die Brammen 1 mit der Breite b1 in das Vorschubwalzgerüst 6 einlaufen, das Vielrollenwalzgerüst mit der Breite b2' verlassen und durch die Kreismesserschere 25 die Breite b2 erhalten, werden sie im Blechwalzwerk 28 auf die wesentlich größere Breite b3 ausgewalzt.

## Patentansprüche

1. Verfahren zur Herstellung von warmplattiertem Metallband durch Walzen unter hohem Druck, bei dem das Plattieren in einem Planetenwalzwerk mit einem Vielrollenwalzgerüst (7) bei einer Dickenabnahme von 90 bis 98 % und einem vorgeschalteten Vorschubwalzgerüst (7) bei einer Dickenabnahme von 25 bis 30 % und einer Walzgeschwindigkeit von 0,8 bis 3,6 m/Minute erfolgt und bei dem vor dem Walzen und der vorhergehenden Erwärmung das Grund- und das Plattierungsmaterial an den einander zugewandten Flächen metallisch blank vorbereitet aufeinandergelegt und an den Rändern durch Punkt- oder Nahtschweißen miteinander verbunden werden, wobei im Vielrollenwalzgerüst (7) in ununterbrochener Aufeinanderfolge der Brammen (1) gewalzt wird, die Brammenenden durch pfeilförmige Vor- und entsprechende Rücksprünge oder ähnliche Materialüberstände profiliert sind und die Brammen (1) Stoß auf Stoß mit einem so geringen Abstand lose aufeinanderfolgen, daß im Walzspalt des Vielrollenwalzgerüstes (7) bereits der Anfang der folgenden Bramme (1) gegriffen wird, solange noch Materialteile der vorhergehenden Bramme (1) nicht in den Walzspalt eingelaufen sind.

2. Verfahren nach Anspruch 1, dadurch gekennzeichnet, daß das Plattierungsmaterial (27) zur Vorbereitung des Walzens derart auf das Grundmaterial (25) aufgebracht wird, daß es an den Brammenenden in Walzrichtung auf das Grundmaterial (25) der anschließenden, in diesem Bereich nicht mit Plattierungsmaterial (27) belegten Bramme überlappt.

3. Verfahren nach Anspruch 1, 2 oder 3, dadurch gekennzeichnet, daß das Erwärmen der für das Walzen vorbereiteten Bramme (1) in reduzierend eingestellter Atmosphäre oder unter Schutzgas erfolgt.

4. Verfahren nach einem der vorhergehenden Ansprüche, dadurch gekennzeichnet, daß bei der Vorbereitung der Bramme (1) für das Walzen vor dem Aufschweißen des Plattierungsmaterials (27) in den Randbereichen Kammern oder Bohrungen (26) im Grundmaterial (25) vorgesehen werden, die zum Plattierungsmaterial (27) münden und in die reduzierende Stoffe eingebracht werden.

5. Verfahren nach einem der vorhergehenden Ansprüche, dadurch gekennzeichnet, daß zur Herstellung von einseitig plattiertem Metallband jeweils zwei aufeinandergelegte Brammen gleichzeitig gewalzt werden, die mit dem Plattierungsmaterial auf den einander zugewandten Flächen belegt, durch eine Schicht aus Kaolin (30) voneinander getrennt und an den Seiten durch angeschweißte Stegbleche (29) miteinander verbunden sind.

6. Verfahren nach einem der Ansprüche 1 bis 5, dadurch gekennzeichnet, daß zur Herstellung von beidseitig plattiertem Metallband zur Vorbereitung der Bramme (1) für das Walzen das Grundmaterial (25) mit dieses einstückig umschließendem Plattierungsmaterial (27) belegt wird, das an den an einer Längsseite der Bramme (1) liegenden Stoßkanten verschweißt wird.

7. Verfahren nach einem der vorhergehenden Ansprüche, dadurch gekennzeichnet, daß im Anschluß an das Walzen im Vielrollenwalzgerüst (7) mittels einer fliegenden Schere (12) und Kantenbesäumscheren Unregelmäßigkeiten am Anfang, am Ende und an den Kanten des Metallbandes abgetrennt werden.

8. Verfahren nach einem der vorhergehenden Ansprüche, dadurch gekennzeichnet, daß im Anschluß an das Walzen im Vielrollenwalzgerüst (7) das Metallband mittels einer fliegenden Schere (12) in Bandstücke (26) aufgeteilt wird, die länger als breit sind und anschließend in einem Blechwalzwerk (28) quer zur bisherigen Walzrichtung zu breiten Blechen warm oder kalt ausgewalzt werden.

## Claims

1. Process for the production of hot-cladded metal strip by high-pressure rolling in which cladding is performed in a planetary mill incorporating a multi-roll stand (7) with a reduction in thickness of 90 to 98 % and in a preceding feed stand with a thickness reduction of 25 to 30 % and at a rolling speed of 0,8 to 3,6 m/minute and in which, prior to rolling and preliminary heating, the base and the cladding material, their facing surfaces metallically bright, are placed on top of each other and connected at the edges by spot or seam welding, with the slabs (1) being rolled in uninterrupted sequence in the multi-roll stand (7) and the slab ends being profiled by arrow-shaped projections and corresponding recesses or similar, said slabs (1) following each other end to end at such close intervals that the front end of the following slab (1) is already gripped in the roll gap of the multi-roll stand (7) while parts of the preceding slab (1) have not yet entered the roll gap.

2. Process according to claim 1, characterized in that, in preparation of rolling, the cladding material (27) is applied to the base material (25) such that it overlaps at the slab end in rolling direction onto the base material (25) of the next slab (27) which is not coated with cladding material (27) in this area.

3. Process according to claims 1, 2 or 3, characterized in that the slab (1) prepared for rolling is heated in a reducing atmosphere or under protective gas.

4. Process according to any one of the preceding claims, characterized in that in the preparation of the slab (1) for rolling before the cladding material (27) is welded on, chambers or holes (26) are provided in the edges of the base material (25) which open onto the cladding material and into which reducing substances are introduced.

5. Process according to any one of the preceding claims characterized in that, for the production of one-side-cladded metal strip, two slabs arranged on top of each other are rolled simultaneously, said slabs being coated with cladding material on their facing surfaces, being separated by a layer of kaolin (30) and being connected together at the sides by welded-on web plates (29).

6. Process according to any one of claims 1 to 5, characterized in that, for the production of two-side-cladded metal strip and in preparation of the slab for rolling, the base material (25) is coated with cladding material enclosing the base material in a single piece, said cladding material being welded together at the edges on one longitudinal side of the slab (1).

7. Process according to any one of the preceding claims, characterized in that, after rolling in the multi-roll stand (7) irregularities ocurring at the start, the end and the edges of the metal strip are cut off by means of a flying shear (12) and edge trimming shears.

8. Process according to any one of the preceding claims, characterized in that, after rolling in the multi-roll stand (7), the metal strip is cut into sections (26) longer than they are wide by a flying shear and subsequently hot or cold rolled transverse to the previous rolling direction into wide plates in a plate mill (28).

**Revendications**

1. Procédé ayant pour objet la fabrication par laminage sous haute pression de bande métallique plaquée à chaud, au cours duquel le placage est effectué sur un laminoir planétaire à l'aide d'une cage multi-cylindres (7), avec une diminution d'épaisseur de 90 à 98 %, et d'une cage d'avance installée en amont, avec une diminution d'épaisseur de 25 à 30 %, et à une vitesse de laminage de 0,8 à 3,6 m/minute, et au cours duquel les matériaux de base et de placage, avant le laminage et avant le réchauffage préalable, sont rendus métalliquement brillant sur les surfaces se faisant face, puis sont superposés et assemblés aux bords par soudage par points ou continu, caractérisé en ce que le laminage sur la cage multi-cylindres (7) a lieu en une suite ininterrompue des brames (1), les extrémités des brames sont profilées au moyen de parties en saillie et de parties en retrait correspondantes en forme de flèche ou au moyen de porte à faux de matériau similaires et les brames se succèdent bout à bout, sans être en contact, dans un intervalle tellement réduit, que le début de la brame suivante (1) est engagé dans l'emprise de la cage multi-cylindres (7) alors que des parties de matériau de la brame précédente (1) ne sont pas encore engagées dans l'emprise de la cage.

2. Procédé selon la revendication 1, caractérisé en ce que le matériau de placage (27), en vue de la préparation du laminage, est rapporté sur le matériau de base (25) de manière à ce qu'il recouvre, aux extrémités des brames et dans le sens de laminage, le matériau de base (25) de la brame suivante non recouverte de matériau de placage dans cette partie.

3. Procédé selon l'une des revendications 1 ou 2, caractérisé en ce que le réchauffage de la brame préparée au laminage (1) est effectué dans une atmosphère oxydante ou contrôlée.

4. Procédé selon l'une quelconque des revendications précédentes, caractérisé en ce qu'au cours de la préparation de la brame (1) au laminage et avant le soudage du matériau de placage (27), des cavités ou des trous (26), qui débouchent sur le matériau de placage (27) et dans lesquels sont introduites des matières oxydantes, sont pratiqués dans les parties périphériques du matériau de base (25).

5. Procédé selon l'une quelconque des revendications précédentes, caractérisé en ce que pour la fabrication de bande métallique plaquée d'un seul côté, il est procédé au laminage simultané de deux brames superposées, recouvertes de matériau de placage sur les deux surfaces se faisant face, séparées l'une de l'autre par une couche de kaolin (30) et reliées entre elles sur les côtés par des tôles entretoises (29) soudées.

6. Procédé selon l'une quelconque des revendications 1 à 5, caractérisé en ce que pour la fabrication de bande métallique plaquée des deux côtés, le matériau de base (25) est enrobé, en vue de la préparation de la brame (1) au laminage, de matériau de placage (27) en une seule pièce dont les bords sont soudés entre eux le long de l'une des faces latérales de la brame (1).

7. Procédé selon l'une quelconque des revendications précédentes, caractérisé en ce que les irrégularités au début, à la fin et sur les bords de la bande métallique sont coupées à l'issue du laminage sur la cage multicylindre (7) au moyen d'une cisaille volante (12) et d'une cisaille de rives.

8. Procédé selon l'une quelconque des revendications précédentes, caractérisé en ce qu'à l'issue du laminage sur la cage multi-cylindres (7) la bande métallique est découpée au moyen d'une cisaille volante (12) en plusieurs morceaux, plus longs que larges, qui sont ultérieurement laminés, à chaud ou à froid, perpendiculairement au sens de laminage précédent sur un laminoir à tôles pour l'obtention de tôles larges.

FIG.1

FIG.3

# FIG.2

FIG. 4b

FIG.5b

FIG.4a

FIG.5a

FIG 6b

FIG.7b

FIG.6a

FIG.7a

FIG. 8

FIG. 9

FIG. 10

FIG. 11

0 145 803

FIG.12

0 145 803